# EUROPEAN PATENT SPECIFICATION

(11) **EP 1 971 639 B1**
(45) Date of publication and mention of the grant of the patent: **25.06.2014**
(21) Application number: 05823649.8
(22) Date of filing: 29.12.2005
(51) Int. Cl.: C08K 3/36, C08K 9/02

(54) **A METHOD OF PREPARING SILICA-DISPERSED AROMATIC VINYL-CYANIDE VINYL COPOLYMER NANOCOMPOSITE**
VERFAHREN ZUR HERSTELLUNG EINES NANOVERBUNDWERKSTOFFS AUS SILICIUMDIOXID UND DISPERGIERTEM COPOLYMER AUS VINYLAROMATEN UND VINYLCYANIDEN
PROCEDE DE PREPARATION D'UN NANOCOMPOSITE DE COPOLYMERE VINYLCYANIDE-VINYLAROMATIQUE CONTENANT UNE SILICE DISPERSEE

(30) Priority: 23.12.2005 KR 20050128969
(43) Date of publication of application: 24.09.2008
(73) Proprietor: CHEIL INDUSTRIES INC., Gumi-si, Gyeongsangbuk-do 730-710 (KR)
(72) Inventor: LEE, Byeong Do, Gyeonggi-do 437-711 (KR); JIN, Young Sub, Gyeonggi-do 461-728 (KR); PARK, Hwan Seok, Gyeonggi-do 426-857 (KR); HONG, Jae Keun, Gyeonggi-do 435-010 (KR); RYU, Young Sik, Gyeonggi-do 431-080 (KR); KIM, Il Jin, Gyeonggi-do 437-711 (KR)
(74) Representative: Bublak, Wolfgang
(86) International application number: PCT/KR2005/004631
(87) International publication number: WO 2007/073016

(56) References cited:
- DE-A1- 3 806 548
- JP-A- 2004 175 915
- US-A- 5 322 889
- US-A1- 2002 107 340
- US-A1- 2003 055 148
- US-B1- 6 610 780
- Karsten Beutner: "Styrol-Acrylnitril-Copolymere", RÖMPP Online, Version 3.13, 30 November 2003 (2003-11-30), XP002640105, Retrieved from the Internet: URL:http://www.roempp.com [retrieved on 2011-06-06]

## Description

### Field of the Invention

The present invention relates to a method of preparing an aromatic vinyl-cyanide vinyl copolymer-silica nanocomposite. More particularly, the present invention relates to a method of preparing an aromatic vinyl-cyanide vinyl copolymer-silica nanocomposite of which properties are improved by polymerizing a monomer mixture with colloidal-silica nanoparticles dispersed in an organic solvent.

### Background of the Invention

As high technology industries such as electrical and electronic industry, automobile industry and aircraft industry develop, new materials with various properties fit for needs of the industries have been in demand. Polymer nanocomposites have been developed in response to the needs.

A clay-polymer nanocomposite, among other nanocomposites, is already well known through many prior art patents and publications. The clay-polymer nanocomposite is a composite having clay plates with a thickness of about 1 nm and a length of several to tens of µm uniformly dispersed in a polymer medium. It is known that clay can improve the mechanical properties of a polymer resin, such as mechanical strength, dimensional stability, and heat resistance, even with addition of a small amount thereof.

A styrene resin is widely used because it has excellent physical and chemical properties such as impact resistance, gloss, fluidity, transparency, and chemical resistance. However, for some articles that have a large-size and a thin profile, excellent impact resistance, fluidity, heat resistance and the like are required. In response to the needs, research on clay-polymer nanocomposite has been conducted. Some clay-polymer nanocomposites and methods for preparing them are disclosed in U.S. Patent Nos. 4,810,734 and 4,889,885, and Korean Patent Application Publication Nos. 2004-74531 and 2005-56812.

However, the clay-polymer nanocomposites of the patents and patent applications have insufficient properties and disadvantages in that the clay particles may be re-crystallized during extrusion and injection molding; or the properties might not be as good as expected, since the polymer is merely infiltrated into a gap between organized clay layers or the distance between the layers becomes wider. In addition, the transparency of the resins might significantly deteriorate.

Patent document DE 38 06 548 A1 discloses a composite material comprising a resin other than polyamide resin and a layered silicate dispersed therein, having a layer thickness of 0.7 to 1.2 nm and an interlayer distance of 3.0 mm or more.

Patent document US 5,322,889 discloses a composite composition obtained by polymerising a radical-polymerisable vinyl compound in the presence of a silicic acid oligomer and, if desired, colloidal silica.

Accordingly, the present inventors has developed a method of making a styrene polymer-silica nanocomposite, using colloidal silica dispersed in an organic solvent, instead of clay.

### Objects of the Invention

An object of the present invention is to provide a method of preparing an aromatic vinyl-cyanide vinyl copolymer-silica nanocomposite.

Another object of the present invention is to provide an aromatic vinyl-cyanide vinyl copolymer-silica nanocomposite with excellent mechanical properties.

Yet another object of the present invention is to provide an aromatic vinyl-cyanide vinyl copolymer-silica nanocomposite with excellent transparency.

Still another object of the present invention is to provide an aromatic vinyl-cyanide vinyl copolymer-silica nanocomposite with excellent processability and moldability.

The objects and other advantages may be achieved by the present invention which will be discussed below.

### Summary of the Invention

A method of preparing an aromatic vinyl-cyanide vinyl copolymer-silica nanocomposite according to the present invention comprises the steps as set out in independent claim 1.

Silica particles in the colloidal silica have a size smaller than 100 nm. The O₂ content in the silica is 20 to 40 wt % per 100 wt % of the silica. The first organic solvent is one selected from the group consisting of methanol, isopropyl alcohol, ethylene glycol and methyl ethyl ketone.

Aromatic vinyl monomer is selected from the group consisting of styrene, α-methyl styrene, vinyl toluene, t-butyl styrene, chlorostyrene, and derivatives thereof.

Cyanide vinyl monomer is one selected from the group consisting of acrylonitrile, methacrylonitrile, and ethacrylonitrile.

In the step of polymerizing the first mixture, solution polymerization is preferable. The solution polymerization includes adding 10 to 40 parts by weight of a second organic solvent to 100 parts by weight of the monomer mixture. The second organic solvent is selected from the group consisting of alcohol, petroleum ether, ethylbenzene, toluene, xylene, carbon tetrachloride, chloroform and methylethylketone.

The present invention includes an aromatic vinyl-cyanide vinyl copolymer-silica nanocomposites prepared according to the method.

The present invention will be discussed below in detail.

### Brief Description of the Drawings

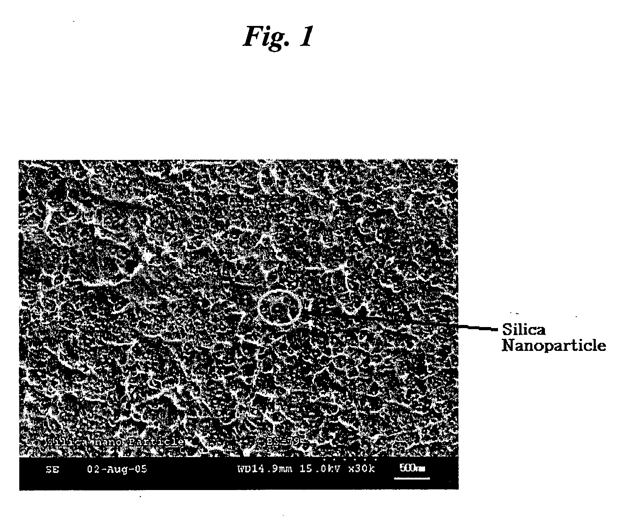

Fig. 1 is a micrograph, taken with an electron microscope, of a styrene polymer-silica nanocomposite according to Example 1 of the present invention.

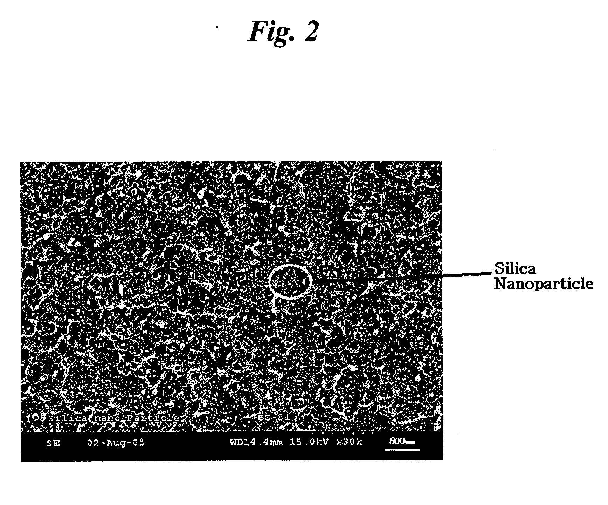

Fig. 2 is a micrograph, taken with an electron microscope, of a styrene polymer-silica nanocomposite according to Example 2 of the present invention.

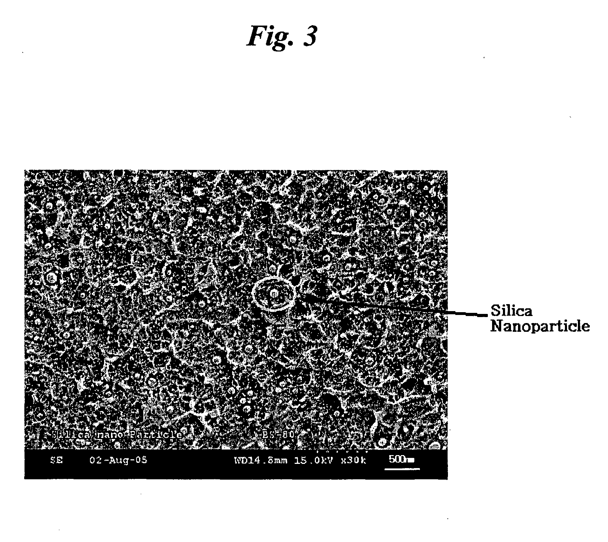

Fig. 3 is a micrograph, taken with an electron microscope, of a styrene polymer-silica nanocomposite according to Example 3 of the present invention.

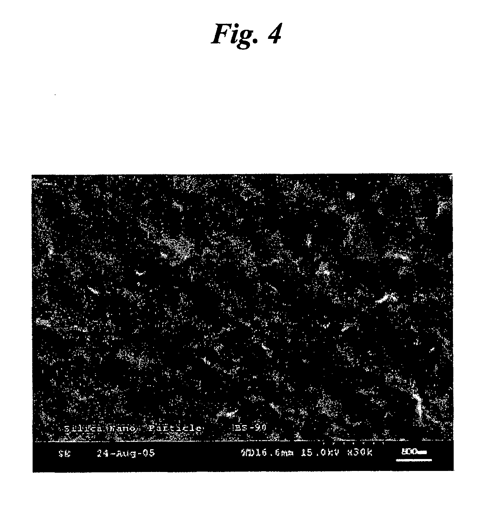

Fig. 4 is a micrograph, taken with an electron microscope, of a styrene polymer according to Comparative Example 1 of the present invention.

### Detailed Description of the Invention

An aromatic vinyl-cyanide vinyl copolymer-silica nanocomposite according to the present invention is prepared by mixing 0.5 to 30 parts by weight of a colloidal silica nanoparticles dispersed in a first organic solvent with 100 parts by weight of a monomer mixture comprising 50 to 80 % by weight of an aromatic vinyl monomer and 20 to 50% by weight of a cyanide vinyl monomer.

The aromatic vinyl monomer which can be used in the present invention includes styrene monomer such as styrene, *a*-methyl styrene, vinyl toluene, t-butyl styrene, chloro styrene and derivatives thereof. Among them, styrene is preferably used.

The cyanide vinyl monomer includes, for example, acrylonitrile, methacrylonitrile, ethacrylonitrile and the like. They can be used alone or in combination with one another. Among them, acrylonitrile is preferably used.

Silica nanoparticles used in the present invention are colloidal silica nanoparticles dispersed in the first organic solvent. An example of a colloidal silica nanoparticles is ORGANOSILICASOL™ available from Nissan Chemical Co. of Japan. The first organic solvent is referred to as such to be distinguished from a second organic solvent used in solution polymerization which will be discussed below in detail.

The silica nanoparticles according to the present invention have a size of not greater than 1,000 nm, and preferably not greater than 100 nm. If the size is greater than 100 nm, improvement in property might be insufficient, and more particularly, the transparency of the resulting resin may deteriorate. The content of O₂ in the silica is 20 to 40 wt % per 100 wt % of the silica. Further, methanol, isopropyl alcohol, ethylene glycol, or methyl ethyl ketone may be used as the first organic solvent.

With regard to the colloidal silica nanoparticles dispersed in the first organic solvent according to the present invention, 0.5 to 30 parts by weight and preferably 1 to 20 part by weight of the colloidal silica are used per 100 parts by weight of the monomer mixture. If less than 0.5 parts by weight is used, properties of the silica nanocomposite might not be apparent. If more than 30 parts by weight is used, dispersibility of the silica nanocomposite might be significantly diminished.

With respect to polymerization according to the present invention, mass polymerization or solution polymerization is preferable. Solution polymerization is more preferable for the dispersion of the silica nanoparticles in the first organic solvent. With respect to a second organic solvent for the solution polymerization, any suitable organic solvent can be used if the organic solvent is inert to any reaction and is capable of dissolving both raw material monomers and the resulting polymerization product. Examples of the second organic solvent include aromatic hydrocarbons such as various alcohols, petroleum ether, ethyl benzene, toluene, and xylene; halides such as carbon tetrachloride and chloroform; or ketones such as methyl ethyl ketone. These can be used alone or in a mixture of two or more of the foregoing..

Although the amount of the second organic solvent may be determined, taking into account a decrease in viscosity in a reactor, it is preferably from 10 to 40 parts by weight per 100 parts by weight of the monomer mixture. If less than 10 parts by weight is used, the viscosity in the reactor may increase and the dispersibility of the silica nanocomposite may deteriorate. If more than 40 parts by weight is used, it might not be economical in that the second organic solvent might cause a decrease in the effective reaction capacity of the reactor or complication and enlargement of a devolatizer and a recycler which will be described later.

The temperature of the polymerization according to the present invention may be preferably from 90 to 180 °C, more preferably from 120 to 160 °C. If the temperature is lower than 90 °C, it might not be easy to obtain a desired degree of polymerization. If the temperature is higher than 180°C, control of polymerization reaction and molecular weight might be difficult because degradation of an initiator is too fast, and it might be difficult to obtain desired properties for the resulting resin due to low glass transition temperature.

Examples of an initiator according to the present invention include organic peroxides such as benzoylperoxide, cumene hydroperoxide, dicumylperoxide, and *t-*butylhydroperoxide; perester organic peroxides such as 1-1-di(*t-*butylperoxy)cyclohexane, 1,1-bis(t-butylperxoy)-3,3,5-trimethylcyclohexane, 1-1-bis(t-butylperxoy)cyclohexane; and azo organic compounds such as azobisisobuthyronitrile, 1-1 azobis (cyclohexane-1-carbonitrile), and 1-t-butylazo-1-cyanocyclohexane. These can be used alone or in a mixture of two or more of the foregoing. 0.02 to 1 parts by weight of the initiator is preferably used per 100 parts by weight of the monomer mixture. The amount of the initiator may vary depending on the kind and temperature of polymerization.

The present invention will be discussed in detail in the following examples, and the following examples are to illustrate, but not to limit the scope of the appended claims.

### Example 1

A complete-mixing type stirring reactor including two reactors connected in series (each having a capacity of 2,000 ml) was provided. A mixture of 5 parts by weight, on the basis of powder, of organic ORGANOSILICASOL™ (MEK-ST available from Nissan Chemical Co. of Japan) of which the average particle size was 10 to 15 nm, and 9 parts by weight of methyl ethyl ketone was mixed with 100 parts by weight of a monomer mixture of 75% by weight of styrene and 25% by weight of acrylonitrile in the reactor. Thereafter, the resulting mixture was subjected to ultrasonic waves for one hour. Then, 0.2 parts by weight of t-dodecyl mercaptan as a molecular weight controller and 0.1 parts by weight of 1-1 bis (t-butylperoxy) cyclohexane as an initiator were fed into a feed tank in which the mixture thereof was completely mixed and stirred. Thereafter, the resulting mixture was continuously supplied into the reactor at a feeding speed of 1.0 kg/hr. The polymerization temperature of the first reactor was 120 °C. The polymerization temperature of the second reactor was 140 °C. A polymerization product in liquid state was continuously produced up to 70 % of polymerization conversion rate. The liquid product was then fed into a devolatizer at 240 °C and 30 Torr, thereby removing unreacted reactants and the organic solvent. Pellets of styrene polymer-silica nanocomposite were prepared through a gear pump. Thereafter, the properties of the pellets were measured according to the methods described below and the results are shown in Table 1.

### Example 2

Pellets were produced in the same manner as in Example 1 except that the ORGANOSILICASOL™ (MEK-ST-MS available from Nissan Chemical Co. of Japan) in which the average diameter of silica nanoparticles is 17 to 23 nm was used. Then, the properties of the pellets were measured. The results are shown in Table 1.

### Example 3

Pellets were produced in the same manner as in Example 1 except that the ORGANOSILICASOL™ (IPA-ST-ZL available from Nissan Chemical Co. of Japan) in which the average diameter of silica nanoparticles is 70 to 100 nm was used. Then, the properties of the pellets were measured. The results are shown in table 1.

### Comparative Example 1

Pellets were produced in the same manner as in Example 1 except that 15 parts by weight of a methyl ethyl ketone was used without ORGANOSILICASOL™. Then, the properties of the pellets were measured. The results are shown in the table 1.

**Table 1**

| | Examples | | | Comparative Example |
|---|---|---|---|---|
| | 1 | 2 | 3 | 1 |
| Content of Inorganic Material (weight %) | 2.4 | 2.7 | 2.8 | 0 |
| Flexural Strength (Mpa) | 140 | 130 | 135 | 120 |
| Flexural Modulus (MPa) | 3,500 | 3,600 | 3,550 | 3,100 |
| Spiral Flow (cm) | 38.5 | 40.0 | 36.3 | 30.5 |
| Transmittance (%) | 79.2 | 78.5 | 65.4 | 80.6 |

Methods for measuring the properties of the pellets are as follows:
a. Content of inorganic material (weight %): 3.0 g of a specimen was placed in a melting pot and then was heated in an electric oven at 600 °C for 60 minutes. The content of inorganic material was measured using the resulting ash.
b. Flexural strength: Flexural strength was measured in accordance with ASTM D790.
c. Flexural modulus: Flexural modulus was measured in accordance with ASTM D790.
d. Spiral flow: The length of a resin which had been injected during injection through a spiral mold was measured and the length of the resin which had been changed during injection or pressurization through a gate in the middle was evaluated.
e. Transmittance: Transmittance was measured in accordance with ASTM D1003.

As shown in the table 1, the styrene polymer-silica nanocomposites in Examples 1 to 3 were better than the styrene polymer of Comparative Example 1 with respect to flexural strength and flexural modulus. In addition, their excellent spiral flow shows that the molding property has improved. Particularly, Transmittance was excellent in Examples 1 and 2 in which the average particle size of ORGANOSILICASOL™ was smaller than 50 nm.

## Claims

1. A method of preparing an aromatic vinyl-cyanide vinyl copolymer-silica nanocomposite, the method comprising
mixing 100 parts by weight of a monomer mixture with 0.5 to 30 parts by weight of colloidal silica nanoparticles dispersed in a first organic solvent to form a first mixture, the monomer mixture comprising 50 to 80 % by weight of an aromatic vinyl monomer and 20 to 50 % by weight of a cyanide vinyl monomer, and
subjecting said first mixture to polymerisation to form said aromatic vinyl-cyanide vinyl copolymer-silica nanocomposite.

2. The method of claim 1, wherein said colloidal silica has a silica particle size of not greater than 100 nm, wherein the content of O₂ in the silica is from 20 to 40 % by weight per 100 % by weight of the silica; and wherein the first organic solvent is selected from the group consisting of methanol, isopropyl alcohol, ethylene glycol, and methyl ethyl ketone.

3. The method of claim 1, wherein said aromatic vinyl monomer is selected from the group consisting of styrene, α-methyl styrene, vinyl toluene, t-butyl styrene, chlorostyrene and a derivative thereof, and wherein the cyanide vinyl monomer is selected from the group comprising acrylonitrile, methacrylonitrile, and ethacrylonitrile.

4. The method of any one of claims 1 to 3, wherein polymerising the first mixture comprises solution polymerisation or mass polymerisation, the solution polymerisation comprising adding, per 100 parts by weight of the monomer mixture, 10 to 40 parts by weight of a second organic solvent selected from the group consisting of aromatic hydrocarbons including alcohol, petroleum ether, ethyl benzene, toluene, and xylene; halides including carbon tetrachloride and chloroform; and ketones.

5. An aromatic vinyl-cyanide vinyl copolymer-silica nanocomposite obtainable according to the method of any one of claims 1 to 3.

6. An aromatic vinyl-cyanide vinyl copolymer-silica nanocomposite obtainable according to the method of claim 4.

## Patentansprüche

1. Verfahren zur Herstellung eines Nanoverbundwerkstoffs aus Siliziumdioxid und einem Copolymer aus Vinylaromaten und Vinylcyanid, wobei das Verfahren umfasst:
Vermischen von 100 Gewichtsteilen eines Monomergemisches mit 0,5 bis 30 Gewichtsteilen kolloidalen Siliziumdioxid-Nanoteilchen, die in einem ersten organischen Lösungsmittel dispergiert sind, zur Bildung eines ersten Gemisches, wobei das Monomergemisch 50 bis 80 Gew.-% eines Vinylaromatenmonomeren und 20 bis 50 Gew.-% eines Vinylcyanidmonomeren umfasst, und
man das erste Gemisch einer Polymerisation unterwirft, um den Nanoverbundwerkstoff aus Siliziumdioxid und einem Copolymer aus Vinylaromaten und Vinylcyanid zu bilden.

2. Verfahren nach Anspruch 1, wobei das kolloidale Siliziumdioxid eine Siliziumdioxidteilchengröße von nicht mehr als 100 nm aufweist, wobei der Gehalt an O₂ im Siliziumdioxid von 20 bis 40 Gew.-% bezogen auf 100 Gew.-% des Siliziumdioxids reicht; und wobei das erste organische Lösungsmittel aus der Gruppe bestehend aus Methanol, Isopropylalkohol, Ethylenglycol und Methylethylketon ausgewählt wird.

3. Verfahren nach Anspruch 1, wobei das Vinylaromatenmonomer aus der Gruppe bestehend aus Styrol, α-Methylstyrol, Vinyltoluol, t-Butylstyrol, Chlorstyrol und einem Derivat davon ausgewählt wird, und wobei das Vinylcyanidmonomer aus der Gruppe bestehend aus Acrylnitril, Methacrylnitril, und Ethacrylnitril ausgewählt wird.

4. Verfahren nach einem der Ansprüche 1 bis 3, wobei das Polymerisieren des ersten Gemisches eine Lösungspolymerisation oder eine Polymerisation in Masse umfasst, wobei die Lösungspolymerisation das Zufügen von, bezogen auf 100 Gewichtsteile des Monomergemisches, 10 bis 40 Gewichtseilen eines zweiten organischen Lösungsmittels umfasst, das ausgewählt wird aus der Gruppe bestehend aus aromatischen Kohlenwasserstoffen, einschließlich Alkohol, Petrolether, Ethylbenzol, Toluol und Xylol; Halogeniden, einschließlich Kohlenstofftetrachlorid und Chloroform; und Ketonen.

5. Nanoverbundwerkstoff aus Siliziumdioxid und einem Copolymer aus Vinylaromaten und Vinylcyanid, erhältlich gemäß dem Verfahren nach einem der Ansprüche 1 bis 3.

6. Nanoverbundwerkstoff aus Siliziumdioxid und einem Copolymer aus Vinylaromaten und Vinylcyanid, erhältlich gemäß dem Verfahren nach Anspruch 4.

## Revendications

1. Procédé de préparation d'un nanocomposite de silice et de copolymère de monomère vinyl-aromatique et de cyanure vinylique, lequel procédé comporte les étapes suivantes :
- mélanger 100 parties en poids d'un mélange de monomères avec 0,5 à 30 parties en poids de nano-particules de silice colloïdale disper-sées dans un premier solvant organique, pour en faire un premier mélange, étant entendu que le mélange de monomères comprend de 50 à 80 % en poids d'un monomère vinyl-aromatique et de 20 à 50 % en poids d'un monomère cyanure vinylique ;
- et soumettre ledit premier mélange à une opération de polymérisa-tion, pour qu'il se forme ledit nanocomposite de silice et de copoly-mère de monomère vinyl-aromatique et de cyanure vinylique.

2. Procédé conforme à la revendication 1, dans lequel ladite silice colloïdale est constituée de particules de silice dont la taille ne dépasse pas 100 nm, la teneur en oxygène de la silice vaut de 20 à 40 % en poids, pour 100 % en poids de silice, et le premier solvant organi-que est choisi dans l'ensemble formé par le méthanol, l'isopropanol, l'éthylèneglycol et la méthyl-éthyl-cétone.

3. Procédé conforme à la revendication 1, dans lequel ledit monomère vinyl-aromatique est choisi dans l'ensemble formé par les suivants : styrène, α-méthyl-styrène, vinyl-toluène, tertiobutyl-styrène et chlorostyrène, ainsi que leurs dérivés, et le monomère cyanure viny-lique est choisi dans l'ensemble formé par

4. Procédé conforme à l'une des revendications 1 à 3, dans lequel l'opération de polymérisation du premier mélange consiste en une polymérisation en masse ou en une polymérisation en solution, la-quelle polymérisation en solution comporte le fait d'ajouter, pour 100 parties en poids du mélange de monomères, de 10 à 40 parties en poids d'un deuxième solvant organique choisi dans l'ensemble formé par les alcools, l'éther de pétrole, les hydrocarbures aromatiques, y compris l'éthyl-benzène, le toluène et les xylènes, les halogénures, y compris le tétrachlorure de carbone et le chloroforme, et les cétones.

5. Nanocomposite de silice et de copolymère de monomère vinyl-aromatique et de cyanure vinylique, accessible selon un procédé conforme à l'une des revendications 1 à 3.

6. Nanocomposite de silice et de copolymère de monomère vinyl-aromatique et de cyanure vinylique, accessible selon un procédé conforme à la revendication 4.
